# EUROPÄISCHE PATENTANMELDUNG

(11) **EP 2 390 422 A2**
(43) Veröffentlichungstag der Anmeldung: **30.11.2011**
(21) Anmeldenummer: 11167671.4
(22) Anmeldetag: 26.05.2011
(51) Int. Cl.: E02F 5/10, E02F 5/12, E02B 11/02, F16L 1/032

(54) **Vorrichtung und Verfahren zum Verlegen einer Drainage**

(30) Priorität: 26.05.2010 DE 102010029312
(71) Anmelder: Möhle, Thomas, 26188 Edewecht (DE)
(72) Erfinder: Möhle, Thomas, 26188 Edewecht (DE)
(74) Vertreter: Eisenführ, Speiser & Partner

(57) **Zusammenfassung**

Die vorliegende Erfindung betrifft eine fahrbare Vorrichtung (1), insbesondere ein Fahrzeug (1) zum Einbringen eines Schüttguts aus Schaumpolystyrol in ein Erdreich (8) umfassend eine Zerkleinerungsvorrichtung (24) zum Herstellen des Schüttguts durch Zerkleinern wenigstens eines Polystyrolblocks, einen Abgabeabschnitt (38) zum Abgeben des Schüttguts in das Erdreich und ein Fördermittel, insbesondere Gebläse (32) zum Fördern des Schüttguts aus Polystyrol von der Zerkleinerungsvorrichtung (24) zum Abgabeabschnitt (38).

## Beschreibung

Die vorliegende Erfindung betrifft ein Fahrzeug zum Einbringen eines Schüttguts sowie ein Verfahren zum Verlegen einer Drainage mittels eines Verlegefahrzeugs.

Eine Drainageeinrichtung zum Entwässern von Flächen, wie beispielsweise in der Landwirtschaft, in Baugebieten oder wie z. B. Sportplätze, umfasst zumindest ein Drainagerohr bzw. Dränrohr mit einer Vielzahl von Öffnungen oder Poren in seiner Rohrwandung, damit Wasser aus dem Erdreich eindringen und durch das Drainagerohr abgeführt werden kann. Um ein Zusetzen dieser Öffnungen oder Poren in dem Drainagerohr zu verhindern und die Entwässerungswirkung durch Vergrößerung der Wassereintrittsfläche zu erhöhen, ist es bekannt, ein zusätzliches Filtermaterial als Bettung und/oder Schüttung Kiesbett oder eine Kiesschüttung vorzusehen, insbesondere oberhalb des Drainagerohrs vorzusehen. Dieses Filtermaterial kann aus Kies, Glasasche (Asche aus Steinkohlekraftwerken) o.ä. bestehen. Im Folgenden wird als Synonym für alle in Frage kommenden Filtermaterialien das Wort Kies benutzt. Eine solche Kiesschicht oder Kiesbett wird auch als Kiesfilter bezeichnet. Der Einbau eines erforderlichen zusätzlichen Kiesfilters wird mit einem Kiesschütter als Rad- oder Raupenfahrzeug durchgeführt. Dies bedeutet eine starke Belastung der Rohrleitungstrasse durch den Kiestransport. Unter Rohrleitungstrasse ist hier der Bereich zu verstehen, in dem das Drainagerohr verlegt wird. Diese starke Belastung hat ihre Ursache in dem hohen Gewicht des Kieses. Dabei wiegen etwa 8 m³ Kies ca. 15 t zuzüglich des Gewichtes des Fahrzeugs, also des Kiesschütters, das etwa 17 t beträgt, so dass sich ein Gesamtgewicht von etwa 32 t ergibt. Durch das häufige Befahren der Trasse, dessen Zufahrten oft einige km auseinander liegen, wird der zu entwässernde Bereich stark belastet und verdichtet.

Um diese Belastung zu verringern, wurde vorgeschlagen, statt Kies zerkleinertes Schaumpolystyrol zu verwenden, das auch allgemein unter der Bezeichnung Styropor bekannt ist. Nachfolgend wird Schaumpolystyrol bzw. Polystyroischaumstoff auch vereinfachend nur als Polystyrol bezeichnet. Das zerkleinerte Material wird auch als Styromull bezeichnet. Das Styromull wird in Säcken zum Verlegeort transportiert und ähnlich wie bei der Variante mit Verwendung von Kies oberhalb des Drainagerohrs eingebracht. Die so eingebrachte Polystyrol-Schicht, also die Schicht aus Styromull kann auch als Styropor-Filter bezeichnet werden.

Nachteilig bei dieser Verwendung von Polystyrol ist, dass eine unerwünschte Verschmutzung der Umgegend durch umher wehendes Polystyrol auftritt. Beim Aufschneiden der Polystyrolsäcke und beim Einfüllen des Polystyrols aus den Säcken in einen entsprechenden Trichter zum Zuführen in einen Verlegegraben oberhalb des eingelegten Drainagerohrs ist ein Entweichen des leichten Materials oftmals schwer zu verhindern. Ebenfalls kann es vorkommen, dass die das Polystyrol enthaltenden Transportsäcke aufplatzen und sich der gesamte Polystyrolinhalt in die Umgegend verteilt.

Zudem ist die beschriebene Verwendung des Polystyrols wenigstens aufgrund der notwendigen Tätigkeit des Aufschneidens und Entladens der Polystyrolsäcke arbeitsaufwändig.

Aufgabe der vorliegenden Erfindung war es somit, eine verbesserte Lösung vorzuschlagen, die wenigstens eines der oben genannten Probleme löst oder zumindest verringert. Insbesondere soll eine Lösung vorgeschlagen werden, bei der das Verlegen eines Drainagerohrs ermöglicht wird, das eine geringe Belastung der Umwelt, sowohl hinsichtlich einer hohen Trassenbelastung als auch hinsichtlich Verschmutzung der Umgegend durch Polystyrol reste schafft. Vorzugsweise soll ein vereinfachtes Verfahren ermöglicht werden. Zumindest ist eine alternative Lösung vorzuschlagen.

Erfindungsgemäß wird eine fahrbare Vorrichtung, insbesondere ein Fahrzeug nach Anspruch 1 vorgeschlagen. Die Vorrichtung kann somit als ein Fahrzeug oder als mehrere Fahrzeuge, insbesondere zwei zusammen arbeitende Fahrzeuge ausgebildet sein. Eine Möglichkeit für die fahrbare Vorrichtung ist, ein Zugfahrzeug mit einem Anhänger vorzusehen.

Demnach wird ein Fahrzeug zum Einbringen eines Schüttguts aus Schaumpolystyrol - auch als Polystyrolschaumstoff zu bezeichnen - in ein Erdreich vorgeschlagen. Dieses Schaumpolystyrol, das auch unter dem Handelsnamen Styropor bekannt ist, besteht im Wesentlichen aus einer Vielzahl kleinerer Schaumpolystyrolpartikel, die insbesondere einen mittleren Durchmesser von etwa 2 bis 30 mm aufweisen können. Dieses Schüttgut kann oberhalb eines Drainagerohrs in einen Graben oder Schacht, in dem das Drainagerohr angeordnet ist, eingebracht werden. Eine solche oberhalb eines Drainagerohrs angeordnete Schicht aus Schaumpolystyrol kann auch als Styropor-Filter oder als Schaumpolystyrol-Filter bezeichnet werden. Nachfolgend ist unter dem Begriff Polystyrol grundsätzlich die Ausgestaltung als Schaumpolystyrol zu verstehen. Das als Schüttgut ausgebildete Schaum polystyrol kann zudem auch als Styropormull oder einfach Styromull bezeichnet werden.

Zum Herstellen dieses Schüttguts weist das Fahrzeug eine Zerkleinerungsvorrichtung auf. Diese Zerkleinerungsvorrichtung ist dazu vorbereitet, zumindest einen Schaumpolystyrolblock mittels einer Zerkleinerungsvorrichtung zu zerkleinern. Somit werden als Ausgangsmaterial Blöcke aus Schaumpolystyrol dem Fahrzeug angeliefert. Erst auf dem Fahrzeug und damit vor Ort werden diese Schaumpolystyrolblöcke zu dem gewünschten Schaumpolystyrolschüttgut mittels der Zerkleinerungsvorrichtung verarbeitet. Ein solcher Schaumpolystyrolblock weist beispielsweise eine Größe von 2000 mm Länge, 500 mm Breite und 100 mm Dicke auf. Solche Schaumpolystyrolblöcke lassen sich auf einfache Weise und platzsparend transportieren. Die Packdichte solcher Schaumpolystyrolblöcke ist wesentlich höher als bei einem mit Styromull gefüllten Sack. Zudem fallen keine leeren Säcke als Verbrauchsmaterial, insbesondere Müll, an. Auch der Arbeitsschritt, die Säcke zum Transport von Styromull zu öffnen, entfällt, einschließlich der hierbei regelmäßig auftretenden Problematik entweichenden Styromulls.

Vorzugsweise werden die Styroporblöcke (Blöcke aus Schaumpolystyrol) auf dem Fahrzeug über eine Einzugsvorrichtung, die auch Beschicker genannt wird, der Zerkleinerungsvorrichtung zugeführt.

Weiterhin ist ein Abgabeabschnitt zum Abgeben des Schüttguts in das Erdreich vorgesehen. Dieser Abgabeabschnitt wird so in einem Graben oder anderer länglicher Öffnung, in der das Drainagerohr bereits eingelegt wurde, geführt, dass das Schüttgut aus Schaumpolystyrol darüber angeordnet wird. Zum Fördern des Schüttguts aus dem Schaumpolystyrol von der Zerkleinerungsvorrichtung zum Abgabeabschnitt ist ein Fördermittel, insbesondere ein Gebläse vorgesehen. Die Schaumpolystyrolblöcke werden somit auf dem Fahrzeug in der Zerkleinerungsvorrichtung zerkleinert und unmittelbar von dort zum Abgabeabschnitt gefördert. Insbesondere die Förderstrecke von der Zerkleinerungsvorrichtung zum Abgabeabschnitt ist dabei so geschlossen ausgestaltet, dass das zerkleinerte Schaumpolystyrol nicht entweichen kann. Hierdurch kann einer Verschmutzung durch zerkleinertes Schaumpolystyrol effizient entgegengewirkt werden.

Gemäß einer Ausführung ist ein Fahrzeug vorgesehen, das die Zerkleinerungsvorrichtung, den Abgabeabschnitt und das Fördermittel aufweist. Gemäß einer weiteren Ausführung ist die Zerkleinerungsvorrichtung auf einem Fahrzeug und der Abgabeabschnitt auf einem anderen Fahrzeug vorgesehen. Beim Einbringen des Schüttguts in das Erdreich fahren beide Fahrzeuge zusammen, insbesondere hintereinander oder nebeneinander her. Das Fördermittel kann auf einem der beiden Fahrzeuge oder dazwischen getragen werden.

Vorzugsweise weist das Fahrzeug eine Grabevorrichtung zum Aufgraben oder Aufpflügen eines Grabens zum Einbringen des Schüttguts auf. Die Vorrichtung kann dabei beispielsweise als Pflug ausgebildet sein, um das Erdreich entsprechend aufzupflügen, um einen schmalen Graben, der auch als Schacht oder Kanal bezeichnet werden kann, herzustellen. In diesen Graben, Kanal oder Schacht kann unmittelbar, insbesondere unmittelbar hinter dem Pflug - gemessen an der Bewegungsrichtung des Pflugs - das Drainagerohr und darauf der Polystyrolfilter eingebracht werden. Nachdem beides eingebracht wurde, kann der Graben oder Kanal unmittelbar wieder zufallen, wodurch ein Austragen des zerkleinerten Schaumpolystyrols verhindert wird. Ein solches Verlegen, bei dem der Graben nicht ausgehoben wird, kann auch als grabenloses Verfahren zur Drainrohrverlegung bezeichnet werden.

Die Grabevorrichtung kann auch als so genannte Fräse ausgebildet sein, die einen Graben, der auch hier als Schacht oder Kanal bezeichnet werden kann, derart aushebt, dass ein Erdaushub neben dem Graben entsteht. Nach dem Einlegen des Drainagerohrs und dem Einbringen des zerkleinerten Schaumpolystyrols wird ein solcher Graben aktiv wieder geschlossen, wie beispielsweise unter Verwendung einer Planierraupe oder dergleichen.

Vorzugsweise umfasst das Fahrzeug auch einen Verlegeabschnitt zum Verlegen eines Drainagerohrs in dem Graben, wobei das Fahrzeug dazu vorbereitet ist, das Schüttgut in dem Graben oberhalb des verlegten Drainagerohrs einzubringen. Das Fahrzeug, das auch als Verlegefahrzeug bezeichnet werden kann, ist somit dazu vorbereitet, das Einlegen eines Drainagerohrs und das Einbringen des zerkleinerten Schaumpolystyrols in einem Arbeitsgang durchzuführen. Insbesondere ist das Fahrzeug dazu vorbereitet, einen Graben aufzugraben, gleichzeitig das Drainagerohr in den Graben einzulegen und darüber das zerkleinerte Schaumpolystyrol einzubringen. Das Fahrzeug benötigt hierfür neben dem Drainagerohr als Ausgangsmaterial nur Blöcke aus Schaumpolystyrol, die unmittelbar vor dem Einbringen des zerkleinerten Schaumpolystyrols zu diesem zerkleinert werden.

Vorzugsweise ist ein Filtersack zwischen der Zerkleinerungsvorrichtung und dem Abgabeabschnitt angeordnet. Das Gebläse ist zwischen der Zerkleinerungsvorrichtung und dem Filtersack angeordnet und dazu vorbereitet, das Schüttgut, nämlich das zerkleinerte Schaum polystyrol, von der Zerkleinerungsvorrichtung in den Filtersack zu fördern, insbesondere dort hineinzublasen. Durch den Filtersack kann die durch das Gebläse geförderte Luft im Wesentlichen entweichen, wobei das geförderte zerkleinerte Schaumpolystyrol zurückgehalten wird. Der Filtersack kann beispielsweise aus einem künstlichen oder natürlichen Textil und/oder Gewebe gefertigt sein. Auch andere Materialien kommen in Betracht, solange sie luftdurchlässig sind und zerkleinertes Schaumpolystyrol zurückhalten können. Insbesondere sollten etwaige Durchtrittsöffnungen für Luft in ihrem mittleren Durchmesser kleiner als 1 mm sein. Ein Filtersack kann auch als Ausgleichssack bezeichnet werden.

Der Filtersack ist mit dem Abgabeabschnitt so verbunden, dass das von dem Gebläse in den Filtersack geförderte Schüttgut durch Gewichtskraft und/oder einen Überdruck im Filtersack in den Abgabeabschnitt weiter gefördert wird. Dabei ist der Abgabeabschnitt insbesondere als senkrechter Schacht oder Trichter mit etwa senkrecht verlaufender Mittelachse ausgebildet. Das zerkleinerte Polystyrol fällt somit aus dem Filtersack in den Abgabeabschnitt und/oder wird zusätzlich durch einen zumindest noch geringen Luftüberdruck im Filtersack in den Abgabeabschnitt gedrängt. Aus dem Abgabeabschnitt gelangt das zerkleinerte Polystyrol dann durch eine entsprechende Abgabeöffnung des Abgabeabschnitts, nämlich insbesondere eine bestimmungsgemäß nach unten weisende Öffnung in den Graben und insbesondere auf das Drainagerohr.

Gemäß einer Ausführungsform weist die Zerkleinerungsvorrichtung eine erste Zerkleinerungsmühle auf, um den Polystyrolblock auf eine erste Zerkleinerungsstufe zu zerkleinern. Hierbei handelt es sich um eine erste Grobzerkleinerung und die erste Zerkleinerungsmühle kann auch als Vorschredder bezeichnet werden und das Zerkleinern dieser ersten Zerkleinerungsstufe kann entsprechend als Vorschreddern bezeichnet werden. Vorzugsweise ist eine Einzugsvorrichtung vorgesehen, die wenigstens einen Schaumpolystyrolblock nach dem anderen in den Vorschredder schiebt.

Weiterhin ist eine zweite Zerkleinerungsmühle vorgesehen, um das Polystyrol in das Schüttgut zu zerkleinern. Insbesondere werden die vorgeschredderten Schaumpolystyrolblöcke automatisch von dem Vorschredder zu der zweiten Zerkleinerungsmühle befördert und dort mit einer gewünschten Körnung gemahlen. Vorzugsweise kann ein Sieb zum Einstellen der gewünschten Korngröße vorgesehen sein. Die zweite Zerkleinerungsmühle mahlt demnach kontinuierlich und die Partikel, die auf die gewünschte Korngröße herunter gemahlen werden, passieren das Sieb. Hierdurch kann durch Austausch des Siebes eine geänderte Korngröße gewählt werden.

Eine weitere Ausgestaltung schlägt vor, dass das Fahrzeug dadurch gekennzeichnet ist, dass der Abgabeabschnitt eine in der Höhe verstellbare Abgabeöffnung aufweist zum Positionieren der Abgabeöffnung in einem Graben in einer Höhe unterhalb der Oberfläche des Erdreiches. Durch das Positionieren der Abgabeöffnung kann das zerkleinerte Schaumpolystyrol somit gezielt an die gewünschte Position in dem Graben gebracht werden und durch die Positionierung in der Höhe wird zudem auch die Einfüllhöhe in dem Graben festgelegt.

Optional wird ein Abstreifmittel, insbesondere ein Abstreifblech vorgesehen, um das in dem Graben eingebrachte Schüttgut glattzuziehen und ein Aufschwemmen oder Wegwehen des Schüttguts zu vermeiden. Ein solches Abstreifmittel ist insbesondere - gemessen an der bestimmungsgemäßen Fahrrichtung des Fahrzeugs - an der Abgabeöffnung nach hinten angeordnet. Während das Fahrzeug während der Fahrt das Schüttgut in den Graben einbringt, streift das Abstreifmittel über das eingebrachte Schüttgut. Gleichzeitig kann von oben die Berandung des Grabens einfallen und von oben an dem Abstreifmittel abstreifen. Hierdurch entsteht eine verhältnismäßig klare Trennebene zwischen dem eingelegten Schüttgut, nämlich dem zerkleinerten Schaum polystyrol, und dem wieder zufallenden bzw. zugeschütteten Erdreich. Zudem kann ein Aufschwemmen - wenn sich beispielsweise in dem Graben beim Verlegen Wasser sammelt - oder Wegwehen des Schüttguts vermieden werden.

Erfindungsgemäß wird außerdem ein Verfahren zum Verlegen einer Drainage mittels eines Verlegefahrzeugs gemäß Anspruch 6 vorgeschlagen. Demnach wird ein Graben oder dergleichen in einem Erdreich aufgegraben oder aufgepflügt, um hierein ein Drainagerohr einzulegen. Im nächsten Schritt wird das Drainagerohr in den Graben eingelegt, wobei diese Schritte derart zeitgleich erfolgen können, dass unmittelbar hinter einer Pflugsichel, einer Fräskette, eines Fräsrades oder ähnlichem Werkzeug das Drainagerohr eingelegt wird. Hierbei ist zu beachten, dass Drainagerohre üblicherweise derart flexibel ausgestaltet sind, dass sie zumindest in einer Rolle mit größerem Durchmesser, wie 1 bis 3 m aufgerollt werden können. Entsprechend kann ein Drainagerohr unmittelbar hinter einem Pflug in den aufgepflügten Graben eingelegt werden.

Als nächster Schritt, der auch vorzugsweise zeitgleich erfolgt, wird wenigstens ein Block aus Schaumpolystyrol, vorzugsweise mehrere Blöcke sukzessive zu einem Schüttgut aus Schaumpolystyrol zerkleinert. Dies erfolgt mittels einer Zerkleinerungsvorrichtung, die auf dem Verlegefahrzeug angeordnet ist. Das so erzeugte Schüttgut wird in einem nächsten Schritt von der Zerkleinerungsvorrichtung zu einer Abgabeöffnung eines Abgabeabschnitts des Verlegefahrzeugs gefördert. Auch dieser Schritt erfolgt vorzugsweise zusammen mit den zuvor genannten Schritten. Weiterhin wird das zum Abgabeabschnitt geförderte Schüttgut aus zerkleinertem Schaumpolystyrol in den Graben eingefüllt. Dies erfolgt insbesondere oder zumindest überwiegend auf oder oberhalb des eingelegten Drainagerohrs. Der Graben kann ganz oder teilweise aufgefüllt werden. Unter teilweisem Einfüllen ist hierbei zu verstehen, dass der Graben in der Höhe nicht vollständig aufgefüllt wird, sondern nur eine Filterschicht aus dem zerbrochenen Schaum polystyrol angeordnet wird, deren Oberfläche unterhalb der Erdoberfläche des betreffenden Erdreichs angeordnet ist.

Schließlich wird der Graben über dem teilweise gefüllten Schüttgut verschlossen. Je nach Art des hergestellten Grabens kann dies von alleine erfolgen, indem der Graben hinter den entsprechenden Maschinenteilen des Verlegefahrzeugs einfällt, oder in dem aktiv, mit dem Verlegefahrzeug oder mit einem separaten Gerät, der Graben geschlossen, insbesondere mit Aushub wieder zugeschüttet und/oder überschüttet wird.

Alle beschriebenen Schritte können zeitgleich, insbesondere in einem gesamten kontinuierlichen Vorgang ausgeführt werden. Bevorzugt werden diese Schritte kontinuierlich durch ein Verlegefahrzeug ausgeführt, gegebenenfalls mit Ausnahme des Schließens des Grabens.

Vorzugsweise erfolgt das Fördern des Schüttguts, nämlich des zerkleinerten Schaumpolystyrols, von der Zerkleinerungsvorrichtung mittels eines Gebläses zum Abgabeabschnitt. Hierdurch ist eine kontinuierlich Förderungsmöglichkeit mit geringem Aufwand und einer geschlossenen Förderstrecke durchführbar.

Günstig ist es, wenn ein wie oben beschriebenes erfindungsgemäßes Verlegefahrzeug verwendet wird.

Die Verwendung großer, quaderförmiger Schaumpolystyrolblöcke ist vorteilhaft, weil diese eine leichte Handhabbarkeit und gleichzeitig hohe Packdichte und damit ein geringes Transportvolumen ermöglichen. Schaumpolystyrolquader und/oder -platten mit einer Länge von 2 m, einer Breite von 0,5 m und einer Dicke von 0,1 m eignen sich zudem sehr gut dazu, sukzessive in eine Zerkleinerungsvorrichtung eingezogen zu werden. Dies gilt in ähnlichem Maße für Quader bzw. Platten ähnlicher Abmessungen. Die vorliegende Erfindung wurde für die Verarbeitung und Verwendung von Schaumpolystyrol beschrieben. Dieses Material hat sich bewährt hinsichtlich Herstellung und gegebenenfalls Recycling und ist insbesondere kostengünstig im Markt erhältlich. Gleichwohl ist die Erfindung nicht auf die Verwendung von Schaumpolystyrol beschränkt. Die vorliegende Erfindung betrifft eine Vorrichtung und ein Verfahren zur Verwendung und Verarbeitung von Schaumpolystyrol. Es ist dem Fachmann klar, dass jegliche andere Materialien, die ähnliche Eigenschaften aufweisen, insbesondere ein geringes Gewicht aufweisen, mittels Zerkleinern zu einem Schüttgut verarbeitbar sind und sich als Drainagefilter eigenen, ebenso zu Schaumpolystyrol gleichwirkend verwendet werden können, ohne dass der Bereich der Erfindung verlassen wird.

Nachfolgend wird die Erfindung exemplarisch anhand eines Ausführungsbeispiels unter Bezugnahme auf die begleitenden Figuren näher erläutert.
- Fig. 1: zeigt ein erfindungsgemäßes Verlegefahrzeug schematisch in einer Seitenansicht bei einer bestimmungsgemäßen Verwendung.
- Fig. 2: zeigt schematisch einen Graben mit eingelegtem Drainagerohr und Schaumpolystyrol-Filter in einer Querschnittsansicht.

Ähnliche, aber nicht identische Elemente können nachfolgend mit identischen Bezugszeichen versehen sein.

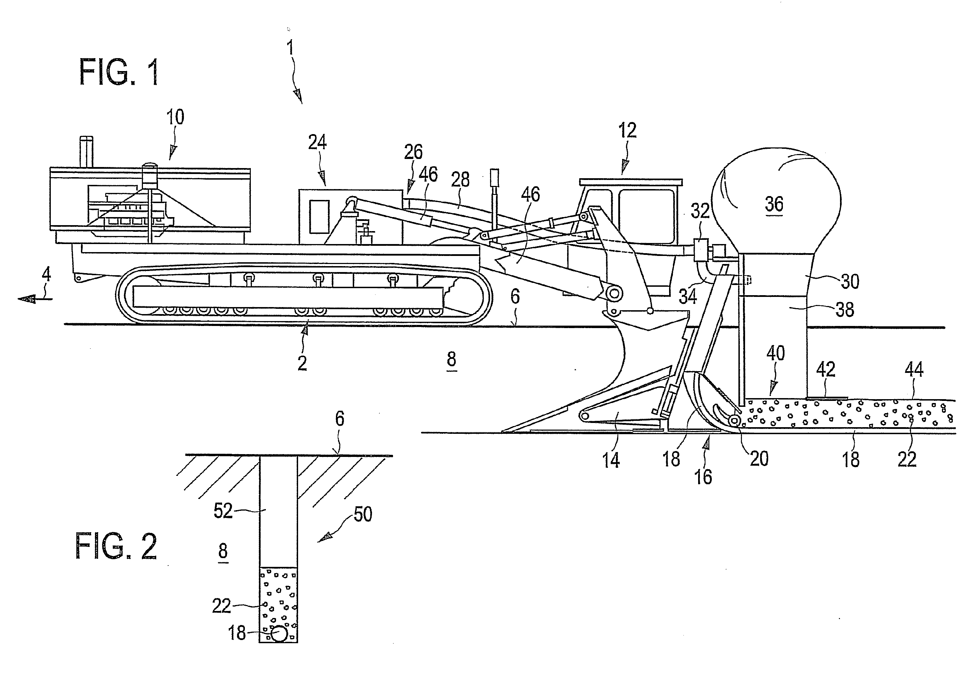

Fig. 1 zeigt ein Verlegefahrzeug 1. Das Verlegefahrzeug 1 weist ein Fahrwerk 2, nämlich Kettenfahrwerk 2 auf - es kann auch ein Radfahrwerk verwendet werden - und bewegt sich damit bei seiner bestimmungsgemäßen Verwendung in die durch einen Pfeil gekennzeichnete Fahrtrichtung 4. Dabei bewegt sich das Verlegefahrzeug 1 mit seinem Fahrwerk 2 auf einer Erdoberfläche 6 des Erdreichs 8. Angetrieben wird das Verlegefahrzeug 1 durch eine angedeutete Maschine 10, die auch als Ausgleichsgewicht dient, und die Steuerung des Verlegefahrzeugs 1 kann aus der Maschinenführerkabine 12 aus erfolgen.

Zum Verlegen eines Drainagerohres, das auch als Drainrohr bezeichnet wird, bewegt sich das Verlegefahrzeug 1 langsam in Fahrtrichtung 4 und pflügt im Grunde temporär mittels des als Sichelpflug ausgebildeten Pflugabschnitts 14 einen Graben in das Erdreich 8. Statt des Pflugabschnitts 14 kann auch bspw. ein als Fräskette ausgebildeter Fräsabschnitt verwendet werden. Im unmittelbaren Anschluss an den Pflugabschnitt 14, nämlich in Fahrtrichtung 4 hinter dem Pflugabschnitt 14, ist ein Rohrverlegeabschnitt 16 angeordnet, der ein Drainrohr 18 in den Graben einlegt. Der Rohrverlegeabschnitt 16 weist somit eine Verlegerolle 20 auf, die das Drainrohr 18 in die gewünschte Position führt und drückt. Das Drainrohr 18 wird dem Rohrverlegeabschnitt 16 zugeführt. Das Drainrohr wird als Rollen- oder Stangenware bereitgestellt und das Verlegefahrzeug 1 transportiert zumindest ein entsprechendes Drainrohr, um dieses kontinuierlich dem Rohrverlegeabschnitt 16 zuzuführen. Zur besseren Übersichtlichkeit ist eine entsprechende Vorratsrolle oder -Stange in der Fig. 1 jedoch nicht dargestellt.

Über dem verlegten Drainrohr 18 wird ein Schaumpolystyrol-Filter 22 aus zerkleinertem Schaumpolystyrol angeordnet. Dieser Schaumpolystyrol-Filter 22 wird mittels des Verlegefahrzeugs 1 zunächst aufbereitet. Hierzu ist eine Zerkleinerungsvorrichtung 24 vorgesehen, die auch als Tandemschredder bezeichnet wird. Der Zerkleinerungsvorrichtung 24 werden Blöcke aus Schaumpolystyrol bereitgestellt und sukzessive zugeführt. In der Zerkleinerungsvorrichtung erfolgt dann eine zweistufige Zerkleinerung. Hierzu weist die Zerkleinerungsvorrichtung 24 eine erste und eine zweite Zerkleinerungsmühle auf, die in der Fig. 1 jedoch nicht gesondert dargestellt sind. Die erste Zerkleinerungsmühle nimmt eine Vorzerkleinerung des jeweiligen Polystyrolblocks vor und die zweite Zerkleinerungsmühle führt eine Zerkleinerung in das gewünschte Endprodukt, nämlich das zerkleinerte Schaumpolystyrol zur Verwendung als Schaumpolystyrol-Filter 22 durch. Die Zerkleinerungsstufen können auch als Vor- und Endzerkleinerung bezeichnet werden.

Das endzerkleinerte Schaumpolystyrol bildet dann ein Schüttgut, das zunächst an einem Ausgang 26 der Zerkleinerungsvorrichtung 24 bereit steht. Von dem Ausgang 26 wird das so erzeugte Schüttgut über eine Leitung, die hier abschnittsweise als flexibler und durchsichtiger Schlauch 28 ausgestaltet ist, zu einem Trichter 30 gefördert. Um das endzerkleinerte Schaum polystyrol aus der Zerkleinerungsvorrichtung 24 vom Ausgang 26 zum Trichter 30 zu fördern, ist ein Sauggebläse 32 vorgesehen. Das Sauggebläse 32 saugt das zerkleinerte Schaumpolystyrol durch den flexiblen Schlauch 28 und führt es schließlich über einen Zuführstutzen 34, der das Sauggebläse 32 mit dem Trichter 30 verbindet, in den Trichter 30. Oberhalb des Trichters 30 ist ein Filtersack 36 angeordnet. Durch den Filtersack 36 kann die Luft, die das Sauggebläse 32 zusammen mit dem zerkleinerten Schaumpolystyrol in den Trichter 30 gefördert hat, entweichen. Durch einen möglichst großen Filtersack 36 wird eine große Filteroberfläche, ein Entweichen der Luft unter geringem Widerstand und damit ein hoher Luftstrom von der Zerkleinerungsvorrichtung zum Trichter 30 ermöglicht. Der Filtersack 36 kann beispielsweise eine Größe mit einem Volumen von 2 m³ aufweisen. Auch größere Filtersäcke mit einem Volumen von 3 oder 4 m³ oder ähnlicher Größe können verwendet werden. Gegebenenfalls kommt ein kleinerer Filtersack mit beispielsweise einem Volumen von 1 m³ in Betracht.

Das zerkleinerte Schaumpolystyrol, das in den Trichter 30 gefördert wurde, kann nicht durch den Filtersack 36 entweichen. Es fällt von dem Trichter 30 durch den Zuführschacht 38 in den Graben und bedeckt das verlegte Drainrohr 18. In dem Filtersack 36 und damit auch in dem Trichter 30 entsteht durch das Gebläse 32 ein geringer Überdruck gegenüber der Umwelt, der eine Bewegung des zerkleinerten Schaumpolystyrols in dem Zuführschacht 38 nach unten unterstützt. Das zerkleinerte Schaum polystyrol gelangt schließlich durch die Abgabeöffnung 40 in seine bestimmungsgemäße Position in dem Graben, um dort den Schaumpolystyrol-Filter zu bilden. Der Zuführschacht 38 bildet hier einen Abgabeabschnitt, der die Abgabeöffnung 40 umfasst.

Um ein Aufschwemmen oder Wegwehen des Schaumpolystyrolfilters 22 zu verhindern, ist an dem Zuführschacht 38, hinter der Abgabeöffnung 40 - bezogen auf die Fahrtrichtung 4 - ein Abstreifblech 42 angeordnet. Beim Verlegen fällt der durch den Pflugabschnitt 14 eingepflügte Graben bezogen auf die Fahrtrichtung 4 hinter dem Zuführschacht 38 wieder zusammen und fällt dabei zum Teil auf das Abstreifblech 42. Das Abstreifblech 42 bewegt sich somit im Wesentlichen in einer Trennschicht oder Trennebene 44 zwischen dem Schaumpolystyrolfilter 22 und einem Teil des Erdreichs 8.

Das Abstreifblech 42, das auch als Streifblech bezeichnet werden kann, ist somit am Ende des Zuführschachtes 38 angeordnet und hält die Filterform stabil, so dass nach einer Teilverfüllung des Draingrabens durch Aushubboden die Filterhöhe möglichst exakt eingehalten werden kann und ein Aufschwemmen bzw. Wegwehen durch Wind vermieden wird.

Ein Teil des Verlegefahrzeugs, insbesondere die Mittel, die bestimmungsgemäß in das Erdreich 8 reichen, wie der Pflugabschnitt 14, der Rohrverlegeabschnitt 16 und der Zuführschacht 38 - der auch als Styropor-Einbauschacht bezeichnet werden kann - sind mittels einer hydraulischen Hubvorrichtung 46 gegenüber dem Fahrwerk 2 absenkbar und anhebbar. Der Zuführschacht 38 kann zudem mittels einer hydraulischen Höhenverstelleinrichtung in der Höhe verstellt werden, um dadurch eine Schichtdicke des Schaumpolystyrol-Filters 22 beeinflussen zu können.

Fig. 2 zeigt schematisch in einer Querschnittansicht einen Graben 50, der durch einen Pflugabschnitt 14 des Verlegefahrzeugs 1 der Fig. 1 oder aber auch durch eine nicht näher dargestellte Fräsvorrichtung hergestellt worden sein kann. In dem Graben 50 ist ein Drainrohr 18 und ein Schaumpolystyrol-Filter 22 dargestellt. Der Graben 50 ist in einem Erdreich 8 ausgebildet und reicht bis zur Erdoberfläche 6. Der obere Grabenabschnitt 52, der oberhalb des Schaumpolystyrol-Filters 22 angeordnet ist, ist nach dem Einbringen des Schaumpolystyrol-Filters 22 durch Erdreich aufzufüllen, was je nach Beschaffenheit des Erdreichs und je nach Art des Aufgrabens des Erdreichs auch von alleine durch Einfallen des Grabens erfolgen kann. Gegebenenfalls ist die Oberfläche im Bereich eines solchen eingefallenen Grabens noch nachzubessern, wie zu glätten und/oder zu verdichten.

Das vorgeschlagene Verfahren und die entsprechende Vorrichtung bieten somit viele Vorteile gegenüber der Verwendung von in Säcken bereitgestelltem Styromull. Gegenüber der Verwendung von Kies, das viele Transporte, viele Abkippplätze und Umschlagplätze einschließlich Kiesreste benötigt bzw. entsprechende Spuren hinterlässt, kann die Verwendung in Säcken bereitgestellten Styromulls zwar weniger Transporte und wenige Umschlagplätze ermöglichen, gleichwohl entstehen dabei oftmals hohe Styromullreste durch kaputte Säcke durch Wind und Vandalismus. Im Vergleich dazu wird eine Lösung vorgeschlagen, die etwa halb so viele Transporte wie bei der Verwendung von in Säcken angeliefertem Styromull schafft. Es entstehen praktisch keine Styromullreste. Die Blöcke aus Polystyrol, insbesondere Styroporblöcke, werden direkt von der Umschlagplatte, üblicherweise ein Baulager, mittels eines geeigneten Transportfahrzeugs zum Verlegefahrzeug gebracht, das auch als Drainmaschine bezeichnet werden kann. So kann durch die erfindungsgemäße Lösung eine Gewichtsentlastung der Trasse beim Verlegen von bis zu 80% erreicht werden. Die Schaumpolystyrolblöcke werden auf der Drainmaschine in einem geschlossenen Verfahren zu Styromull verarbeitet. Auch dies trägt zur Vermeidung von Verschmutzungen bei.

## Patentansprüche

1. Fahrbare Vorrichtung (1), insbesondere Fahrzeug (1) zum Einbringen eines Schüttguts aus Schaumpolystyrol in ein Erdreich (8) umfassend
- eine Zerkleinerungsvorrichtung (24) zum Herstellen des Schüttguts durch Zerkleinern wenigstens eines Polystyrolblocks,
- einen Abgabeabschnitt (38) zum Abgeben des Schüttguts in das Erdreich und
- ein Fördermittel, insbesondere Gebläse (32) zum Fördern des Schüttguts von der Zerkleinerungsvorrichtung (24) zum Abgabeabschnitt (38).

2. Fahrbare Vorrichtung (1) nach Anspruch 1,
**gekennzeichnet durch**
- eine Grabevorrichtung (14) zum Aufgraben, Auffräsen oder Aufpflügen eines Grabens zum Einbringen des Schüttguts und/oder
- einen Verlegeabschnitt (16) zum Verlegen eines Drainagerohres (18) in dem bzw. einem Graben, wobei das Fahrzeug (1) dazu vorbereitet ist, das Schüttgut in dem Graben oberhalb des verlegten Drainagerohrs (18) einzubringen.

3. Fahrbare Vorrichtung (1) nach Anspruch 1 oder 2,
**gekennzeichnet durch** einen zwischen der Zerkleinerungsvorrichtung (24) und dem Abgabeabschnitt (38) angeordneten Filtersack (36), wobei das Gebläse (32) zwischen der Zerkleinerungsvorrichtung (24) und dem Filtersack (36) angeordnet ist, um das Schüttgut von der Zerkleinerungsvorrichtung (24) in den Filtersack (36) zu fördern, und wobei der Filtersack (36) und der Abgabeabschnitt (38) so miteinander verbunden sind, dass das von dem Gebläse (32) in den Filtersack (36) geförderte Schüttgut **durch** Gewichtskraft und/oder einen Überdruck im Filtersack (36) in den Abgabeabschnitt (38) weiter gefördert wird.

4. Fahrbare Vorrichtung (1) nach einem der vorstehenden Ansprüche,
**dadurch gekennzeichnet, dass** die Zerkleinerungsvorrichtung (24)
- eine erste Zerkleinerungsmühle aufweist, um den Polystyrolblock auf eine erste Zerkleinerungsstufe zu zerkleinern und
- eine zweite Zerkleinerungsmühle, um das Polystyrol in das Schüttgut zu zerkleinern, wobei optional Siebe vorgesehen sind, um eine Korngröße der Partikel des Schüttguts vorzugeben.

5. Fahrbare Vorrichtung (1) nach einem der vorstehenden Ansprüche,
**dadurch gekennzeichnet, dass** der Abgabeabschnitt (38) eine in der Höhe verstellbare Abgabeöffnung (40) aufweist zum Positionieren der Abgabeöffnung (40) in einem bzw. dem Graben in einer Höhe unterhalb der Oberfläche (6) des Erdreichs (8) und dass optional die Abgabeöffnung (40) mit einem Abstreifmittel (42), insbesondere Abstreifblech (42), versehen ist, um das in dem bzw. einem Graben eingebrachte Schüttgut glatt zu ziehen und/oder um ein Aufschwimmen oder Wegwehen des Schüttgutes zu vermeiden.

6. Verfahren zum Verlegen einer Drainage mittels einer fahrbaren Verlegevorrichtung (1), insbesondere eines Verlegefahrzeugs (1), umfassend die Schritte
- Aufgraben, Auffräsen oder Aufpflügen eines Grabens in einem Erdreich (8) zum Einlegen eines Drainagerohres (18),
- Einlegen des Drainagerohres (18) in den Graben,
- Zerkleinern wenigstens eines Schaumpolystyrolblocks zu einem Schüttgut aus zerkleinertem Schaumpolystyrol in einer auf der fahrbaren Verlegevorrichtung angeordneten, Zerkleinerungsvorrichtung,
- Fördern des Schüttguts von der Zerkleinerungsvorrichtung (24) zu einer Abgabeöffnung (40) eines Abgabeabschnitts (42),
- ganz oder teilweises Einfüllen des Schüttguts in den Graben auf und/oder oberhalb des eingelegten Drainagerohrs (18) und
- Schließen des Grabens über dem ganz oder teilweise eingefüllten Schüttgut, und/oder schließen lassen des Grabens, wenn dieser so aufgegraben oder aufgepflügt wurde, dass er sich selbständig nach dem ganz oder teilweisen Einfüllen des Schüttguts darüber verschließt, insbesondere einfällt.

7. Verfahren nach Anspruch 6,
**dadurch gekennzeichnet, dass** die Verfahrensschritte zeitgleich erfolgen, während sich die fahrbaren Verlegevorrichtung (1) entlang einer vorgesehenen Strecke zum Verlegen der Drainage bewegt.

8. Verfahren nach Anspruch 6 oder 7,
**dadurch gekennzeichnet, dass** das Schüttgut mittels eines Gebläses (32) von der Zerkleinerungsvorrichtung (24) zum Abgabeabschnitt (38) gefördert wird.

9. Verfahren nach einem der Ansprüche 6 bis 8,
**dadurch gekennzeichnet, dass** als fahrbaren Verlegevorrichtung (1) eine fahrbare Vorrichtung (1) nach einem der Ansprüche 1 bis 5 verwendet wird.

10. Verfahren nach einem der Ansprüche 6 bis 9,
**dadurch gekennzeichnet, dass** der wenigstens eine zum Zerkleinern verwendete Schaumpolystyrolblock vor dem Zerkleinern etwa quader- und/oder plattenförmig ausgebildet ist mit einer Länge von 1 bis 6 m, vorzugsweise 1 bis 3 m, insbesondere etwa 2 m, einer Breite von 0,2 bis 1 m, insbesondere etwa 0,5 m und einer Dicke von 0,05 bis 0,2 m, insbesondere etwa 0,1 m und/oder dass das Schüttgut aus zerkleinertem Schaumpolystyrol Korngrößen mit einem mittleren Durchmesser im Bereich von 0,5 bis 100 mm, vorzugsweise 2 bis 30 mm, insbesondere 5 bis 20 mm, aufweist.
